# FASCICULE DE BREVET EUROPEEN

(11) **EP 2 481 937 B1**
(45) Date de publication et mention de la délivrance du brevet: **09.10.2013**
(21) Numéro de dépôt: 12152318.7
(22) Date de dépôt: 24.01.2012
(51) Int. Cl.: F16B 7/04

(54) **Dispositif de connexion pour assembler deux profilés**
Verbindungsvorrichtung zum Zusammenbau von zwei Profilen
Connection device for assembling two profile members

(30) Priorité: 27.01.2011 FR 1150652
(43) Date de publication de la demande: 01.08.2012
(73) Titulaire: Sodem System, 28260 Le Mesnil Simon (FR)
(72) Inventeur: Gamain, Claude, 92500 RUEIL MALMAISON (FR)
(74) Mandataire: CAPRI

(56) Documents cités:
- FR-A1- 2 454 551
- FR-A1- 2 721 377

## Description

La présente invention concerne un dispositif de connexion selon le préambule de la revendication 1. Un tel dispositif est connu du document FR 2 454 551 A1. Les domaines d'application privilégiés de la présente invention sont ceux du matériel d'exposition dit matériel d'installation générale et accessoirement du mobilier d'exposition et/ou d'entreprise, domaines dans lesquels il est nécessaire de pouvoir monter et démonter rapidement des structures et/ou des meubles. Bien entendu, la présente invention peut également être utilisée dans tous les autres domaines dans lesquels deux profilés doivent être assemblés, de préférence perpendiculairement.

Dans l'art antérieur, on connait déjà le document FR-2 721 377 A1 qui décrit un dispositif de connexion pour assembler deux profilés. Ce dispositif comprend une épingle mobile formant une paire de mâchoires. Pour écarter les mâchoires de l'épingle, il est prévu des moyens d'écartement fixes, et pour déplacer l'épingle, il est prévu des moyens de came comprenant un levier rotatif autour d'un axe auquel est associé un disque excentrique. Ce dispositif comprend en outre une cage à l'intérieur de laquelle sont reçus l'épingle, les moyens d'écartement ainsi que les moyens de came. Ainsi, l'épingle se déplace dans la cage sous l'action du disque excentrique actionné par le levier rotatif, et ses mâchoires sont écartées par les moyens d'écartement qui sont fixes dans la cage. Par conséquent, ce dispositif de connexion nécessite la mise en oeuvre d'une cage fixe et d'une épingle mobile. De plus, les moyens de came comprennent, outre le levier, une broche mobile qui sollicite l'épingle par l'intermédiaire d'un ressort. L'actionnement du levier est de ce fait difficile et nécessite une force importante.

La présente invention a pour but d'alléger la force d'actionnement nécessaire pour faire pivoter le levier. Elle a également pour but de réduire le nombre de pièces.

Pour atteindre ces buts, la présente invention propose que la biellette est reliée à un élément de butée par un troisième axe de rotation, les trois axes de rotation étant parallèles, la distance entre le premier axe et le troisième axe étant variable en actionnant le levier. A la différence du document FR-2 721 377 A1, les moyens d'actionnement déplacent l'organe d'écartement entre les mâchoires, alors que dans le document de l'art antérieur les moyens de came déplacent l'épingle par rapport aux moyens d'écartement. D'autre part, le disque excentrique supporté par le levier dans le document FR-2 721 377 A1 a été remplacé par une biellette dont la démultiplication est bien plus forte. Le troisième axe de rotation peut être fixe, ou de préférence mobile à l'intérieur de la cage.

Selon une caractéristique avantageuse de l'invention, l'organe d'écartement définit un axe de déplacement qui est perpendiculaire aux trois axes de rotation, les premier et troisième axes de rotation étant situés sur l'axe de déplacement, alors que le deuxième axe de rotation est mobile par rapport à l'axe de déplacement en fonction de la position du levier. De préférence, le deuxième axe est situé au-dessus de l'axe de déplacement lorsque l'organe d'écartement n'écarte pas les mâchoires et en dessous de l'axe de déplacement lorsque l'organe d'écartement écarte les mâchoires. Ainsi, lorsque les mâchoires sont écartées, le deuxième axe de rotation est sollicité vers une position stable hors de l'équilibre correspondant à l'alignement des trois axes de rotation. Cela garantit que le dispositif de connexion est dans un état stable lorsqu'il est fermé et en prise avec un profilé d'accrochage.

Selon un autre aspect avantageux de l'invention, le levier rotatif est relié à l'organe d'écartement par le premier axe de rotation. Ainsi, le levier agit directement sur l'organe d'écartement, et non pas sur la cage qui reste fixe.

Selon une caractéristique intéressante de la présente invention, l'élément de butée est déplaçable dans la cage entre deux positions extrêmes. Il n'est cependant pas exclu que l'élément de butée puisse être fixe à l'intérieur de la cage. Avantageusement, l'élément de butée est sollicité vers les mâchoires par un ressort qui prend appui sur la cage. De préférence, la cage comprend un logement ouvert pour la réception d'une broche de blocage permettant de fixer le dispositif dans la cavité du profilé récepteur, le ressort agissant sur la broche pour la maintenir dans son logement. D'autre part, la cage peut former une nervure de butée contre laquelle l'élément de butée vient en butée sous l'action du ressort et/ou du troisième axe sollicité par la biellette et le levier. Lorsque le dispositif de connexion est ouvert, c'est-à-dire lorsque le levier rotatif est levé, le ressort pousse l'élément de butée de manière à venir en butée contre la nervure de butée. A l'inverse, lorsque le levier rotatif est abaissé, sollicitant ainsi l'organe d'écartement entre les mâchoires, il peut arriver que le ressort soit comprimé au maximum de telle sorte que l'élément de butée vienne en butée contre la nervure de butée. Toutefois, cette situation n'est pas recherchée, étant donné qu'il est toujours préférable que le ressort remplisse sa fonction de sollicitation élastique.

Selon un autre aspect avantageux de l'invention, l'organe d'écartement vient en prise avec des surfaces convergentes des mâchoires pour les écarter de manière progressive jusqu'à ce qu'elles viennent en prise serrante avec l'ouverture rétrécie de la gorge du profilé d'accrochage. De cette manière, en fonction de la taille de l'ouverture rétrécie de la gorge, l'organe d'écartement s'engage plus ou moins entre les mâchoires pour les écarter. Bien entendu, en l'absence de profilés d'accrochage, l'organe d'écartement s'engage de manière maximale entre les deux mâchoires pour les écarter au maximum. De préférence, l'organe d'écartement est sollicité élastiquement entre les mâchoires par le ressort dont la force est transmise par l'intermédiaire de l'élément de butée, la biellette et le levier. La transmission de la force du ressort est optimisée du fait que les trois axes de rotation sont sensiblement alignés.

Selon un autre aspect intéressant de l'invention, la cage est réalisée de manière monobloc par extrusion de métal, avantageusement avec un écartement initial entre les mâchoires qui est supérieur à l'écartement maximal dans la cavité du profilé récepteur. L'écartement initial des mâchoires permet d'utiliser un noyau ou broche d'extrusion qui est suffisamment robuste : en effet, l'intérieur de la cage est réalisé avec une broche ou noyau d'extrusion qui est relié à la plaque d'extrusion uniquement par un pont formant la séparation entre les deux mâchoires. En écartant initialement ces mâchoires, on augmente la taille du pont et ainsi la robustesse du noyau ou broche d'extrusion. Par la suite, il est facile de contraindre la cage de manière à rapprocher quelque peu ces mâchoires, de manière à pouvoir l'introduire dans la cavité d'un profilé récepteur.

L'esprit de l'invention réside dans l'utilisation d'une biellette associée à un levier rotatif pour déplacer un organe d'écartement entre les mâchoires d'une cage. Cet agencement nécessite la mise en oeuvre de trois axes de rotation permettant de faire varier la distance séparant deux axes. Un aspect intéressant de la présente invention réside dans le fait que la cage formant les mâchoires est fixe, de sorte qu'il n'est pas nécessaire de prévoir une épingle mobile à l'intérieur d'une cage comme c'est le cas dans le document FR-2 721 377. En revanche, l'organe d'écartement est mobile à l'intérieur de la cage, et de préférence les trois axes de rotation sont mobiles à l'intérieur de la cage.

L'invention sera maintenant plus amplement décrite en référence aux dessins joints, donnant à titre d'exemple non limitatif, un mode de réalisation de la présente invention.

Sur les figures :
La figure 1 est une vue en perspective d'un dispositif de connexion selon l'invention avec le levier rotatif à moitié relevé,
La figure 2 est une vue en coupe transversale longitudinale à travers le dispositif de connexion de la figure 1 engagé dans la cavité d'un profilé récepteur, avec le levier rotatif relevé au maximum,
La figure 3 est une vue similaire à celle de la figure 2 avec le levier rotatif abaissé, et
La figure 4 est une vue similaire aux figures 2 et 3 avec le levier rotatif abaissé, et avec les mâchoires en prise avec un profilé d'accrochage.

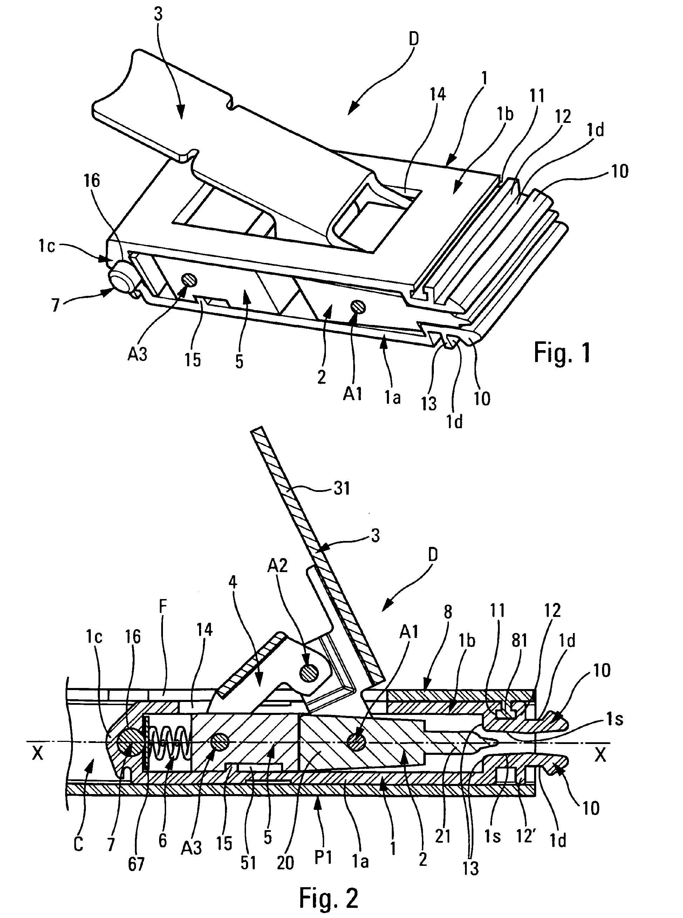

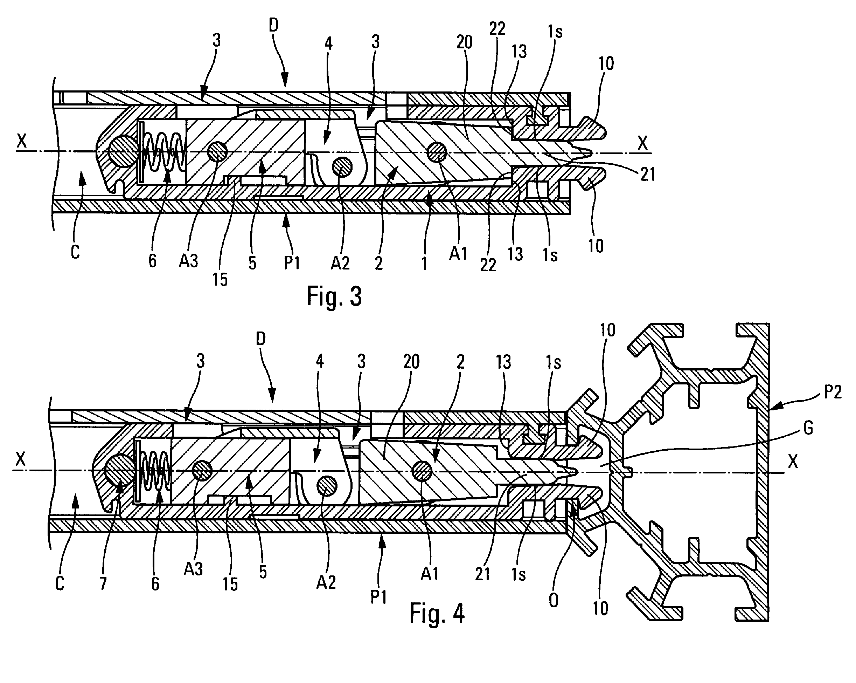

On se référera indifféremment à l'ensemble des figures 1 à 4 pour décrire en détail la structure et le fonctionnement d'un dispositif de connexion réalisé selon une forme de réalisation non limitative de l'invention. Le dispositif de connexion désigné dans son ensemble par la référence numérique D est destiné à être monté fixement dans une cavité C d'un profilé récepteur P1, comme on peut le voir sur les figures 2 à 4. Des mâchoires 10 du dispositif de connexion D font saillie hors de la cavité C afin de pouvoir venir en prise avec un profilé d'accrochage P2 formant une gorge G ayant une ouverture rétrécie O. On peut voir sur la figure 4 que les deux mâchoires 10 sont disposées à l'intérieur de la gorge G en prise avec l'ouverture rétrécie O. De cette manière, le profilé d'accrochage P2 est solidement assemblé au profilé récepteur P1. La configuration triangulaire des extrémités extérieures des mâchoires 10 contribue même à exercer une traction sur le profilé P2 pour le plaquer contre le profilé P1. De cette manière, on élimine tout jeu possible entre les deux profilés P1 et P2. Ainsi assemblé, le profilé P2 s'étend perpendiculairement au profilé P1. On peut également dire que l'extrémité du profilé P1 est connectée sur la longueur du profilé P2. Les profilés P1 et P2 peuvent être réalisés avec n'importe quelle technique et n'importe quel matériau, mais de préférence ils sont réalisés par extrusion d'aluminium.

Le dispositif de connexion D de l'invention comprend plusieurs éléments constitutifs, à savoir une cage 1, un organe d'écartement 2, un levier rotatif 3, une biellette 4, un élément de butée 5, un ou plusieurs ressort(s) 6 et une broche de blocage 7. Optionnellement, le dispositif de connexion peut comprendre une petite plaquette 67 entre le ressort 6 et la broche 7, ainsi qu'un plastron enjoliveur 8 qui forme un accessoire de la cage 1.

La cage 1 est avantageusement réalisée par extrusion d'aluminium. La cage 1 présente par conséquent une section uniforme et sa largeur peut être de l'ordre de 27 mm par exemple. La cage 1 se présente sous la forme d'une épingle comprenant deux branches sensiblement parallèles 1a et 1 b reliées ensemble par une de leurs extrémités par une section de jonction 1 c. Cette section 1 c forme avantageusement un logement ouvert 16 destiné à recevoir la broche de blocage 7. Cette broche fait saillie axialement hors du logement 16 de part et d'autre de la cage, comme on peut le voir sur la figure 1. Ainsi, les extrémités de la broche 7 servent de tétons de blocage à l'intérieur de la cavité C du profilé récepteur. A cet effet, le profilé récepteur forme deux trous de passage pour la broche de blocage 7 qui est engagée dans la cage 1 une fois la cage insérée dans la cavité C du profilé récepteur P1. Cette broche de blocage 7 peut assurer à elle seule la fixation du dispositif de connexion D à l'intérieur de la cavité C du profilé récepteur P1. On verra ci-après de quelle manière la broche de blocage 7 est maintenue à l'intérieur de son logement ouvert 16. En effet, on peut déjà remarquer que le logement 16 est ouvert vers l'intérieur de la cage de sorte que la broche 7 n'est pas entièrement entourée par le métal constitutif de la cage. A l'extrémité opposée à la section de jonction 1C, les deux branches 1a et 1 b forment les mâchoires 10 du dispositif de connexion. Les mâchoires 10 forment chacune une rainure de réception 1d dans laquelle est reçu un bord de l'ouverture rétrécie O, comme représenté sur la figure 4. Cette rainure 1d est formée entre une partie épaissie triangulaire de la mâchoire 10 et une bride 12, 12'. La bride 12 formée au niveau de la branche 1b définit également un rail 11 pour la réception du plastron enjoliveur 8 qui est formé avec un talon 81 destiné à être engagé par coulissement à l'intérieur du rail 11. Le plastron 8 n'a qu'une fonction esthétique permettant d'obturer partiellement la fente F formée dans le profilé récepteur P1 pour le passage du levier rotatif 3, comme on le verra ci-après. Ce plastron enjoliveur 8 est optionnel. Il est tout à fait possible de réaliser les deux mâchoires 10 de manière parfaitement symétrique. Le rail 11 est donc optionnel. Il faut également remarquer que les deux mâchoires 10 s'étendent l'une vers l'autre aux extrémités des branches 1 a et 1 b en formant un épaulement intérieur 13 qui réduit la distance entre les deux mâchoires 10. Avantageusement, les mâchoires 10 forment deux surfaces convergentes 1s qui convergent l'une vers l'autre de manière à réduire encore davantage la distance les séparant. Les deux surfaces convergentes 1 s convergent l'une vers l'autre à partir des épaulements 13 vers les extrémités libres des mâchoires 10. On verra ci-après quelle est la fonction de ces surfaces convergentes 1 s. La branche 1 a de la cage 1 forme également une nervure de butée 15 qui est orientée vers l'intérieur de la cage, comme on peut le voir sur les figures. D'autre part, la branche 1 b forme une grande ouverture 14 pour le passage du levier rotatif 3, comme on peut très clairement le voir sur la figure 1.

Pour écarter les mâchoires 10 de la cage 1, l'organe d'écartement 2 est déplaçable dans la cage 1 le long d'un axe de déplacement X. L'organe d'écartement 2 comprend un bloc 20 et une lame d'écartement 21 reliés ensemble en formant deux zones de butée 22. Le bloc 20 est percé d'un alésage situé sur l'axe X et recevant un axe de rotation A1. L'axe A1 s'étend perpendiculairement au plan de la feuille de la figure. La lame d'écartement 21 est destinée à venir s'insérer entre les deux surfaces convergentes 1 s des mâchoires 10. La lame 21 présente de préférence une extrémité libre pointue ou arrondie afin de faciliter son déplacement entre les deux surfaces convergentes 1 s. On voit sur les différentes figures que la lame d'écartement 21 peut se déplacer dans la cage 1 entre les mâchoires 10 entre deux positions extrêmes correspondant à la figure 2 et à la figure 3. En effet, sur la figure 2, la lame d'écartement 21 n'est même pas en prise avec les surfaces convergentes 1s. Son extrémité est à peine engagée entre ces deux surfaces. A l'inverse, sur la figure 3, la lame d'écartement 21 est entièrement engagée entre les mâchoires 10 et les écarte au maximum. On peut remarquer sur la figure 3 que les deux zones de butée 22 sont en butée franche contre les épaulements 13 de la cage.

Le levier rotatif 3 est relié à l'organe d'écartement 2 par l'axe de rotation A1, tel que visible sur la figure 2. De cette manière, l'organe d'écartement 2 et le levier rotatif 3 sont solidaires l'un de l'autre, tout en pouvant pivoter l'un par rapport à l'autre autour de l'axe de rotation A1. D'autre part, le levier rotatif 3 est solidaire de la biellette 4 par un second axe de rotation A2. On peut noter que l'axe de rotation A1 est situé sur l'axe de déplacement X de l'organe d'écartement 2, alors que l'axe de rotation A2 est déplaçable par rapport à cet axe X. Bien entendu, les axes de rotation A1 et A2 sont espacés d'une certaine distance qui est fixe, puisque définie par le levier 3. Le levier comprend aussi un bras de levier 31 par lequel le levier 3 peut être saisi pour l'entraîner en rotation autour de l'axe A1, de manière à déplacer l'axe A2 par rapport à l'axe de déplacement X de l'organe d'écartement 2.

La biellette 4, en plus d'être reliée au levier 3 par l'axe A2 est reliée à l'élément de butée 5 par un troisième axe de rotation A3, qui est également situé sur l'axe de déplacement X. Ainsi, la distance séparant les axes A1 et A3 est variable le long de l'axe X en déplaçant le second axe A2. Les axes A1 et A3 restent toujours sur l'axe de déplacement X, alors que l'axe A2 est déplaçable par rapport à cet axe X, comme on peut le voir par comparaison des figures 2, 3 et 4. On peut même remarquer que l'axe A2 est situé bien au-dessus de l'axe X sur la figure 2, alors que même axe A2 est situé en dessous de l'axe X, sur les figures 3 et 4. Sur la figure 2, l'écartement entre les axes A1 et A3 est minimal, étant donné que l'organe d'actionnement 2 étant en butée contre l'élément de butée 5, alors que sur les figures 3 et 4, l'écartement entre les axes A1 et A3 est maximal, avec l'axe A2 situé juste en dessous de l'axe de déplacement X.

L'élément de butée 5 peut être réalisé sous la forme d'une pièce fixe à l'intérieur de la cage 1, ou peut même être intégré à la cage 1. Cependant, de préférence, l'élément de butée 5 est une pièce mobile à l'intérieur de la cage 1. De ce fait, non seulement les axes A1 et A2 sont mobiles par rapport à la cage, mais également l'axe A3. On peut remarquer que l'élément de butée 5 forme un évidement 51 au niveau de sa face inférieure tournée vers la branche 1a de la cage 1. Ainsi, la nervure de butée 15 est logée dans cet évidement 51 et peut se déplacer entre deux positions externes extrêmes correspondant à la mise en butée de la nervure 15 avec les deux bords longitudinaux de l'évidement 51. Sur la figure 2, la nervure de butée 15 est en contact d'un bord de l'évidement 51. L'élément de butée 5 peut ainsi se déplacer de manière limitée à l'intérieur de la cage 1. Cependant, il est plus avantageux de solliciter l'élément de butée 5 à l'aide d'un (ou de plusieurs) ressort 6 en direction des mâchoires 10. Le ressort 6 peut par exemple prendre appui directement sur la broche de blocage 7 pour la maintenir dans son logement 16. En variante, une petite plaquette 67 peut être interposée entre le ressort 6 et la broche 7 afin d'éviter le déplacement transversal du ressort 6 lors du retrait ou de l'engagement de la broche 7 dans son logement 16. La force exercée par le ressort 6 permet d'appuyer efficacement la plaquette 67 contre la broche 7 afin de la maintenir dans son logement 16. D'autre part, ce ressort 6 permet de solliciter l'élément de butée 5 contre la nervure de butée 15, comme représenté sur la figure 2, lorsque l'organe d'écartement 2 n'est pas en prise entre les mâchoires 10. Dans cette position, la sollicitation exercée par le ressort 6 ne s'applique que sur l'élément de butée 5, sans être transmis à la biellette 4, au levier 3 et/ou à l'organe d'écartement 2. A partir de la position représentée sur la figure 2, le levier rotatif 3 peut être actionné, ce qui a pour effet de déplacer la biellette 4 et l'organe d'écartement 2, sans bouger l'élément de butée 5. En revanche, lorsque la lame d'écartement 21 s'engage entre les mâchoires 10, les frottements entre les surfaces convergentes 1 s et la lame 21 vont induire une force de réaction qui va s'opposer à celle du ressort 6. Lorsque les mâchoires 10 ne sont pas engagées dans une gorge G d'un profilé d'accrochage P2, comme représenté sur la figure 3, la lame 21 peut s'engager au maximum entre les mâchoires 10 jusqu'à ce que le bloc 20 vienne en butée contre les épaulements 13. A partir de ce moment, l'élément de butée 5 va se déplacer hors de contact de butée avec la nervure de butée 15 en comprimant le ressort 6. Lorsque le bras 31 du levier 3 est complètement rabattu dans la fenêtre F du profilé P1, l'axe de rotation A2 reliant le levier 3 à la biellette 4 est situé en dessous de l'axe X, ce qui correspond à une position extrêmement stable, étant donné que le ressort 6 a tendance à repousser encore davantage l'axe A2 en éloignement de l'axe de déplacement X. La distance entre les axes A1 et A3 est proche du maximum correspondant à l'alignement des trois axes A1, A2 et A3.

En revanche, en se référant à la figure 4, on peut voir que la lame d'écartement 21 n'est pas complètement engagée entre les surfaces convergentes 1 s, comme cela est le cas sur la figure 3. En effet, la lame 21 ne peut pas s'engager davantage, étant donné que les mâchoires 10 sont en prise avec l'ouverture rétrécie O de la gorge G. Dans cette position, l'élément de butée 5 est contraint de se déplacer en direction de la broche 7 en comprimant le ressort 6. La force de réaction induite par le frottement entre la lame 21 et les mâchoires 10 est transmise à l'élément de butée 5 par l'intermédiaire du levier 3 et de la biellette 4. L'axe de rotation A2 est dans la même position que dans la figure 3, c'est-à-dire situé légèrement en dessous de l'axe de déplacement X de l'organe d'écartement 2. L'écartement entre les axes A1 et A3 est le même que dans la figure 3. Cependant, l'ensemble constitué par l'organe d'écartement 2, le levier 3, la biellette 4 et l'élément de butée 5 est dans une position différente que dans la figure 3, étant donné que la lame d'écartement 21 n'est pas engagée aussi profondément entre les mâchoires 10. Le ressort 6 sur la figure 4 est comprimé davantage que sur la figure 3. La figure 4 correspond à une configuration donnée pour une taille d'ouverture rétrécie O. Avec une ouverture O plus petite, la lame d'écartement 21 serait engagée moins profondément à l'intérieur entre les surfaces convergentes 1s des mâchoires 10, et de ce fait l'ensemble constitué par l'organe d'écartement 2, le levier 3, la biellette 4 et l'élément de butée 5 serait déplacé en direction de la broche 7 en comprimant encore davantage le ressort 6. Une position extrême pourrait être atteinte dans laquelle la nervure de butée 15 viendrait en butée contre le bord opposé de l'évidement 51. Une telle configuration n'est toutefois pas souhaitée.

La présente invention a été décrite en référence à un mode de réalisation non limitatif mettant en oeuvre un levier rotatif associé à une biellette pour déplacer un organe d'actionnement d'écartement 2. Toutefois, la présente invention peut également s'appliquer à un dispositif de connexion d'un autre type dans lequel le levier associé à la biellette 4 sont utilisés pour déplacer la cage ou une épingle formant les mâchoires destinées à venir en prise avec le profilé d'accrochage B2. Ainsi, la présente invention s'applique à tout dispositif de connexion utilisant un levier rotatif associé à une biellette de démultiplication de force. En effet, la biellette a pour fonction principale d'adoucir l'actionnement du levier en démultipliant la force développée par la rotation du levier. La forme des mâchoires ainsi que de l'élément d'écartement n'est pas critique pour la présente invention. L'organe d'écartement peut se déplacer par rapport à des mâchoires fixes, ou inversement. De même, l'élément de butée peut être mobile ou fixe. Il peut être sollicité par un ressort ou non. Il est cependant utile, lorsqu'il est mobile, que l'élément de butée vienne en butée contre une nervure de butée lorsque l'on lève le levier rotatif. En effet, cela permet d'extraire l'organe d'écartement d'entre les mâchoires 10. Le ressort est avantageux, car il permet de compenser les tolérances et créer une sollicitation élastique.

Grâce à l'invention, on peut réaliser des dispositifs de connexion de profilés dont l'actionnement ne nécessite aucun outil et une force limitée en raison de la présence de la biellette qui démultiplie la force du levier rotatif.

## Revendications

1. Dispositif de connexion (D) pour assembler un premier profilé récepteur (P1) présentant une cavité interne (C) et un second profilé d'accrochage (P2) présentant au moins une gorge (G) ayant une ouverture rétrécie (O), le dispositif de connexion (D) étant destiné à être reçu fixement dans la cavité interne (C) du profilé récepteur (P1) et comprenant une cage (1) formant une paire de mâchoires (10) destinées à venir en prise dans la gorge (G) du profilé d'accrochage (P2) à travers son ouverture rétrécie (O), le dispositif (D) comprenant un organe d'écartement (2) pour écarter les mâchoires (10) et des moyens d'actionnement (3, 4) pour réaliser un déplacement relatif entre l'organe d'écartement (2) et les mâchoires (10), ces moyens d'actionnement comprenant un levier rotatif (3) autour d'un premier axe de rotation (A1), les moyens d'actionnement comprenant en outre une biellette (4) reliée au levier (3) par un deuxième axe de rotation (A2), **caractérisé en ce que** la biellette (4) est reliée à un élément de butée (5) par un troisième axe de rotation (A3), les trois axes de rotation (A1, A2, A3) étant parallèles, la distance entre le premier axe (A1) et le troisième axe (A3) étant variable en actionnant le levier (3).

2. Dispositif de connexion selon la revendication 1, dans lequel l'organe d'écartement (2) définit un axe de déplacement (X) qui est perpendiculaire aux trois axes de rotation (A1, A2, A3), les premier (A1) et troisième (A3) axes de rotation étant situés sur l'axe de déplacement (X), alors que le deuxième axe de rotation (A2) est mobile par rapport à l'axe de déplacement (X) en fonction de la position du levier (3).

3. Dispositif de connexion selon la revendication 2, dans lequel le deuxième axe (A2) est situé au-dessus de l'axe de déplacement (X) lorsque l'organe d'écartement (2) n'écarte pas les mâchoires (10) et en dessous de l'axe de déplacement (X) lorsque l'organe d'écartement (2) écarte les mâchoires (10).

4. Dispositif de connexion selon l'une quelconque des revendications précédentes, dans lequel le levier rotatif (3) est relié à l'organe d'écartement (2) par l'axe de rotation (A1).

5. Dispositif de connexion selon l'une quelconque des revendications précédentes, dans lequel l'élément de butée (5) est déplaçable dans la cage (1) entre deux positions extrêmes.

6. Dispositif de connexion selon l'une quelconque des revendications précédentes, dans lequel l'élément de butée (5) est sollicité vers les mâchoires (10) par un ressort (6) qui prend appui sur la cage (1).

7. Dispositif de connexion selon la revendication 6, dans lequel la cage (1) comprend un logement ouvert (16) pour la réception d'une broche de blocage (7) permettant de fixer le dispositif (D) dans la cavité (C) du profilé récepteur (P1), le ressort (6) agissant sur la broche (7) pour la maintenir dans son logement (16).

8. Dispositif de connexion selon la revendication 6, dans lequel la cage (1) forme une nervure de butée (15) contre laquelle l'élément de butée (5) vient en butée sous l'action du ressort (6) et/ou du troisième axe (A3) sollicité par la biellette (4) et le levier (3).

9. Dispositif de connexion selon l'une quelconque des revendications précédentes, dans lequel l'organe d'écartement (2) vient en prise avec des surfaces convergentes (1 s) des mâchoires (10) pour les écarter de manière progressive jusqu'à ce qu'elles viennent en prise serrante avec l'ouverture rétrécie (O) de la gorge (G) du profilé d'accrochage (P2).

10. Dispositif de connexion selon les revendications 6 et 9, dans lequel l'organe d'écartement (2) est sollicité élastiquement entre les mâchoires (10) par le ressort (6) dont la force est transmise par l'intermédiaire de l'élément de butée (5), la biellette (4) et le levier (3).

11. Dispositif de connexion selon l'une quelconque des revendications précédentes, dans lequel la cage (1) est réalisée de manière monobloc par extrusion de métal, avantageusement avec un écartement initial entre les mâchoires (10) qui est supérieur à l'écartement maximal dans la cavité (C) du profilé récepteur (P1).

## Patentansprüche

1. Verbindungsvorrichtung (D) zum Zusammenbau eines ersten Aufnahmeprofils (P1), das einen Innenhohlraum (C) aufweist, und eines zweiten Einhängeprofils (P2), das mindestens eine Rille (G) mit einer verengten Öffnung (O) aufweist, wobei die Verbindungsvorrichtung (D) dafür geeignet ist, fest in dem Innenhohlraum (C) des Aufnahmeprofils (P1) aufgenommen zu werden, und ein Gehäuse (1) aufweist, das ein Backenpaar (10) bildet, das dafür geeignet ist, in der Rille (G) des Einhängeprofils (P2) durch die verengte Öffnung (O) von dieser in Eingriff zu kommen, wobei die Vorrichtung (D) einen Abstandhalter (2), um die Backen (10) auf Abstand zu halten, und Betätigungsmittel (3, 4) aufweist, um eine Relativverschiebung zwischen dem Abstandhalter (2) und den Backen (10) zu verwirklichen, wobei diese Betätigungsmittel einen Drehhebel (3) um eine erste Drehachse (A1) aufweisen, wobei die Betätigungsmittel des Weiteren einen Schwenkarm (4) aufweisen, der über eine zweite Drehachse (A2) mit dem Hebel (3) verbunden ist, **dadurch gekennzeichnet, dass** der Schwenkarm (4) über eine dritte Drehachse (A3) mit einem Anschlagelement (5) verbunden ist, wobei die drei Drehachsen (A1, A2, A3) parallel sind, wobei der Abstand zwischen der ersten Achse (A1) und der dritten Achse (A3) durch Betätigung des Hebels (3) veränderbar ist.

2. Verbindungsvorrichtung nach Anspruch 1, wobei der Abstandhalter (2) eine Verschiebeachse (X) definiert, die zu den drei Drehachsen (A1, A2, A3) senkrecht ist, wobei sich die erste (A1) und die dritte (A3) Drehachse auf der Verschiebeachse (X) befinden, während die zweite Drehachse (A2) in Bezug auf die Verschiebeachse (X) in Abhängigkeit von der Position des Hebels (3) beweglich ist.

3. Verbindungsvorrichtung nach Anspruch 2, wobei sich die zweite Achse (A2) oberhalb der Verschiebeachse (X) befindet, wenn der Abstandhalter (2) die Backen (10) nicht auf Abstand hält, und sich unterhalb der Verschiebeachse (X) befindet, wenn der Abstandhalter (2) die Backen (10) auf Abstand hält.

4. Verbindungsvorrichtung nach einem der vorhergehenden Ansprüche, wobei der Drehhebel (3) durch die Drehachse (A1) mit dem Abstandhalter (2) verbunden ist.

5. Verbindungsvorrichtung nach einem der vorhergehenden Ansprüche, wobei das Anschlagelement (5) zwischen zwei Endpositionen in dem Gehäuse (1) verschiebbar ist.

6. Verbindungsvorrichtung nach einem der vorhergehenden Ansprüche, wobei das Anschlagelement (5) durch eine Feder (6), die sich auf dem Gehäuse (1) abstützt, gegen die Backen belastet ist.

7. Verbindungsvorrichtung nach Anspruch 6, wobei das Gehäuse (1) einen offenen Sitz (16) zur Aufnahme eines Sperrstifts (7) aufweist, der es ermöglicht, die Vorrichtung (D) in dem Hohlraum (C) des Aufnahmeprofils (P1) zu fixieren, wobei die Feder (6) auf den Stift (7) wirkt, um ihn in ihrem Sitz (16) zu halten.

8. Verbindungsvorrichtung nach Anspruch 6, wobei das Gehäuse (1) eine Anschlagrippe (15) bildet, gegen die das Anschlagelement (5) unter Einwirkung der Feder (6) und/oder der dritten Achse (A3), die von dem Schwenkarm (4) und dem Hebel (3) belastet ist, zum Liegen kommt.

9. Verbindungsvorrichtung nach einem der vorhergehenden Ansprüche, wobei der Abstandhalter (2) mit konvergierenden Oberflächen (1s) der Backen (10) in Eingriff kommt, um sie schrittweise auf Abstand zu bringen, bis sie mit der verengten Öffnung (O) der Rille (G) des Einhängeprofils (P2) in geklemmten Eingriff kommen.

10. Verbindungsvorrichtung nach den Ansprüchen 6 und 9, wobei der Abstandhalter (2) von der Feder (6) elastisch zwischen den Backen (10) belastet ist, wobei die Kraft der Feder über das Anschlagelement (5), den Schwenkarm (4) und den Hebel (3) übertragen wird.

11. Verbindungsvorrichtung nach einem der vorhergehenden Ansprüche, wobei das Gehäuse (1) durch Metallextrusion aus einem Stück gefertigt ist, vorteilhafterweise mit einem anfänglichen Abstand zwischen den Backen (10), der größer ist als der Höchstabstand in dem Hohlraum (C) des Aufnahmeprofils (P1).

## Claims

1. A connection device (D) for assembling together a receiver first section member (P1) presenting an inner cavity (C), and a fastener second section member (P2) presenting at least one groove (G) having a constricted opening (O), the connection device (D) being intended to be received in stationary manner in the inner cavity (C) of the receiver member (P1) and including a cage (1) forming a pair of jaws (10) for coming into engagement in the groove (G) of the fastener member (P2) through its constricted opening (O), the device (D) including a spacer member (2) for spacing the jaws (10) apart, and actuator means (3, 4) for moving the spacer member (2) relative to the jaws (10), the actuator means including a pivotable lever (3) that pivots about a first pivot pin (A1), the actuator means also including a connection bar (4) that is connected to the lever (3) via a second pivot pin (A2), **characterized in that** the connection bar (4) is connected to an abutment element (5) via a third pivot pin (A3), the three pivot pins (A1, A2, A3) being parallel, the distance between the first pin (A1) and the third pin (A3) being variable by actuating the lever (3).

2. A connection device according to claim 1, wherein the spacer member (2) defines a movement axis (X) that is perpendicular to the three pivot pins (A1, A2, A3), the first and third pivot pins (A1, A3) being situated on the movement axis (X), while the second pivot pin (A2) is movable relative to the movement axis (X) as a function of the position of the lever (3).

3. A connection device according to claim 2, wherein the second pin (A2) is situated above the movement axis (X) when the spacer member (2) does not space the jaws (10) apart, and below the movement axis (X) when the spacer member (2) spaces the jaws (10) apart.

4. A connection device according to any preceding claim, wherein the pivotable lever (3) is connected to the spacer member (2) via the pivot pin (A1).

5. A connection device according to any preceding claim, wherein the abutment element (5) is movable in the cage (1) between two extreme positions.

6. A connection device according to any preceding claim, wherein the abutment element (5) is urged towards the jaws (10) by a spring (6) that bears against the cage (1).

7. A connection device according to claim 6, wherein the cage (1) includes an open housing (16) for receiving a blocking pin (7) making it possible to fasten the device (D) in the cavity (C) of the receiver member (P1), the spring (6) acting on the pin (7) so as to hold it in its housing (16).

8. A connection device according to claim 6, wherein the cage (1) forms an abutment rib (15) against which the abutment element (5) comes into abutment under the action of the spring (6) and/or of the third pin (A3) that is urged by the connection bar (4) and by the lever (3).

9. A connection device according to any preceding claim, wherein the spacer member (2) comes into engagement with converging surfaces (is) of the jaws (10) so as to space them apart progressively until they come into clamping engagement with the constricted opening (O) of the groove (G) of the fastener member (P2).

10. A connection device according to claim 6 and claim 9, wherein the spacer member (2) is urged resiliently between the jaws (10) by the spring (6) having a force that is transmitted by means of the abutment element (5), the connection bar (4), and the lever (3).

11. A connection device according to any preceding claim, wherein the cage (1) is made as a single piece by extruding metal, advantageously with an initial spacing between the jaws (10) that is greater than the maximum spacing in the cavity (C) of the receiver member (P1).
